(19) Europäisches Patentamt
European Patent Office
Office européen des brevets

(11) **EP 1 347 834 B1**

(12) **FASCICULE DE BREVET EUROPEEN**

(45) Date de publication et mention de la délivrance du brevet:
**08.05.2013 Bulletin 2013/19**

(21) Numéro de dépôt: **01994886.8**

(22) Date de dépôt: **18.12.2001**

(51) Int Cl.:
*B02C 23/06* (2006.01)   *C09C 3/10* (2006.01)
*C09C 3/04* (2006.01)   *D21H 19/58* (2006.01)
*C09D 17/00* (2006.01)   *B01F 17/00* (2006.01)

(86) Numéro de dépôt international:
**PCT/FR2001/004025**

(87) Numéro de publication internationale:
**WO 2002/049766 (27.06.2002 Gazette 2002/26)**

(54) **AGENT D'AIDE AU BROYAGE DE MATERIAUX MINERAUX EN SUSPENSION AQUEUSE. SUSPENSIONS ET LEURS UTILISATIONS**

MAHLHILFSMITTEL MINERALISCHER STOFFE IN WÄSSERIGEN SUSPENSIONEN, SUSPENSIONEN UND DEREN VERWENDUNGEN

GRINDING AID OF MINERAL MATERIALS IN AQUEOUS SUSPENSION, RESULTING AQUEOUS SUSPENSIONS AND USES THEREOF

(84) Etats contractants désignés:
**AT BE CH CY DE DK ES FI FR GB GR IE IT LI LU MC NL PT SE TR**

(30) Priorité: **20.12.2000 FR 0016680**

(43) Date de publication de la demande:
**01.10.2003 Bulletin 2003/40**

(73) Titulaire: **COATEX S.A.S.**
**69730 Genay (FR)**

(72) Inventeurs:
• **QIU, Xueping**
**Rutland, Vt 05701 (US)**

• **MONGOIN, Jacques**
**F-69550 Quincieux (FR)**
• **JACQUEMET, Christian**
**F-69005 Lyon (FR)**

(74) Mandataire: **Fiorucci, Hélène**
**Coatex SAS**
**DPI**
**35 rue ampère**
**69730 Genay (FR)**

(56) Documents cités:
EP-A- 0 100 948   EP-A- 0 113 048
EP-A- 0 278 880   EP-A- 0 542 643
EP-A- 0 542 644   WO-A-01/48093
WO-A-99/23185

**Description**

La présente invention concerne le secteur technique des charges minérales, notamment pour les applications papetières, et leurs traitements appropriés afin d'améliorer soit le procédé de fabrication de la feuille de papier, soit ses propriétés.

L'invention concerne l'utilisation d'homopolymères et/ou copolymères de l'acide acrylique et/ou méthacrylique avec un ou plusieurs monomères acryliques, vinyliques ou allyliques comme agent d'aide au broyage de pigments et/ou charges minérales en suspension aqueuse.

L'invention concerne également lesdites suspensions aqueuses de pigments et/ou charges minérales et leurs utilisations notamment dans les domaines du papier, comme entre autre la fabrication ou le couchage du papier, avec obtention en particulier de propriétés égales ou meilleures du pigment et/ou de la charge, et notamment sa capacité à diffuser la lumière visible, exprimée par le coefficient de diffusion de la lumière S.

Depuis longtemps déjà l'homme de l'art connaît l'utilisation d'agents de broyage de particules minérales en suspension aqueuse constitués par des polymères et/ou copolymères acryliques, de faible poids moléculaire, totalement ou partiellement neutralisés par divers agents de neutralisation (FR 2 603 042, EP 0 100 947, EP 0 127 388, EP 0 129 329, EP 0 542 644).

L'homme de l'art connaît également l'utilisation d'agents de broyage constitués par la fraction des polymères et/ou copolymères acryliques dont la viscosité spécifique est comprise entre 0,3 et 0,8 (brevets FR 2 488 814, EP 0 100 948, EP 0 542 643).

On connait également le document EP 0 100 948 qui décrit un agent de broyage à base de polymères et /ou copolymères acryliques pour suspension aqueuse de matériaux minéraux grossiers en vue d'application pigmentaire. On connait enfin le document WO 01/48093 qui concerne l'utilisation d'homopolymères et/ou copolymères hydrosolubles de l'acide acrylique avec un ou plusieurs monomères acryliques, vinyliques ou allyliques comme agent de dispersion de suspension aqueuse de carbonate de calcium. Mais ces divers types d'agents de broyage de faible poids moléculaire, qui permettent d'obtenir des suspensions aqueuses de particules minérales affinées, fluides et stables dans le temps, ne permettent pas d'aboutir à des suspensions aqueuses de pigments et/ou charges minérales, notamment de carbonate de calcium, affinées disposant d'une capacité de diffusion de la lumière visible, exprimée par le coefficient de diffusion de la lumière S, suffisante et requise par l'utilisateur final. En effet cet utilisateur final dispose de papiers plus blancs qu'autrefois grâce à la mise en oeuvre de carbonate de calcium en remplacement du kaolin, mais ce carbonate de calcium présente l'inconvénient, par rapport au kaolin précédemment utilisé, d'aboutir à des feuilles de papier disposant de propriétés optiques moindres, ce qui est un inconvénient. De ce fait l'utilisateur ressent le besoin d'augmenter ces propriétés optiques tout en gardant la blancheur acquise par la mise en oeuvre du carbonate de calcium. Confrontée à ce problème d'amélioration des propriétés optiques, la Demanderesse a alors trouvé, de manière surprenante que la sélection de la neutralisation des homopolymères et/ou des copolymères hydrosolubles de l'acide acrylique et/ou méthacrylique avec un ou plusieurs monomères acryliques, vinyliques ou allyliques permet d'obtenir des suspensions aqueuses de pigments et/ou charges minérales, notamment de carbonate de calcium, affinées, disposant d'une capacité à diffuser la lumière visible suffisante et requise par l'utilisateur final permettant d'aboutir à des formulations papetières telles que notamment les sauces de couchage papetières ou encore la charge de masse du papier, présentant des propriétés d'opacité améliorées ainsi que d'aboutir à des formulations peintures présentant des propriétés d'opacité améliorées.

Ainsi un des buts de l'invention est l'utilisation d'homopolymères et/ou copolymères hydrosolubles de l'acide acrylique et/ou méthacrylique avec un ou plusieurs monomères acryliques, vinyliques ou allyliques spécifiquement neutralisé, comme agent d'aide au broyage de pigments et/ou charges minérales en suspension aqueuse permettant d'obtenir des suspensions aqueuses de pigments et/ou charges minérales, notamment de carbonate de calcium, affinées, disposant de capacité à diffuser la lumière visible suffisante et requise par l'utilisateur final permettant d'aboutir à des formulations papetières telles que notamment les sauces de couchage papetières ou encore la charge de masse du papier, présentant des propriétés d'opacité améliorées.

Un autre but de l'invention, outre ceux déjà mentionnés, est de fournir des suspensions aqueuses de matières minérales affinées, obtenues par broyage et caractérisées en ce qu'elles disposent de capacité à diffuser la lumière visible accrue et en ce qu'elles contiennent de 0,05 % à 5 % en poids sec, et préférentiellement de 0,3 % à 1,0 % en poids sec par rapport au poids sec de matière minérale, d'agent d'aide au broyage de suspension aqueuse mis en oeuvre selon l'invention.

Enfin, un but supplémentaire de l'invention concerne l'utilisation de ces suspensions aqueuses minérales dans les domaines de la peinture, de la charge de masse et du couchage du papier ainsi que les sauces de couchages papetières contenant lesdites suspensions aqueuses minérales.

Contrairement à l'enseignement de l'art antérieur (EP 0 542 643 - EP 0 542 644) qui indique que le pourcentage molaire de neutralisation des sites acides actifs du polymère par un agent de neutralisation contenant l'ion magnésium est compris entre 40 % et 60 % pour obtenir un agent de broyage amélioré, la Demanderesse a trouvé de manière surprenante que la sélection du pourcentage molaire de neutralisation des sites acides actifs du polymère par un agent de neutralisation contenant l'ion calcium doit être compris entre 15 % et 40 % pour obtenir les propriétés précitées, le taux molaire de neutralisation des sites acides actifs du polymère par un ou plusieurs agents monofonctionnel étant compris entre 7 % et 70 %, le taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium étant compris entre 0 % et 30 %, et un taux molaire de sites acides actifs non neutralisés compris entre 15 % et 78 %.

Les agents de neutralisation monofonctionnels sont choisis parmi les hydroxydes des cations alcalins, en particulier le sodium et le potassium, ou encore le lithium, l'ammoniaque, ou bien parmi les amines primaires ou secondaires aliphatiques et/ou cycliques telles que par exemple les éthanolamines, la mono et diéthylamine ou encore la cyclohexylamine et sont très particulièrement choisis parmi les composés contenant l'ion sodium.

Ces homopolymères et/ou copolymères résultent des divers procédés connus de la polymérisation radicalaire mettant en oeuvre les initiateurs de polymérisation bien connus de l'homme du métier tels que par exemple des composés à base d'hydroxylamine ou encore mettant en oeuvre les initiateurs de polymérisation tels que les peroxydes comme notamment l'eau oxygénée, l'hydroperoxyde de tertiobutyle ou les persels comme notamment le persulfate de sodium, le persulfate d'ammonium, le persulfate de potassium ou analogues, ou encore l'hypophosphite de sodium, l'acide hypophosphoreux ou bien encore l'acide phosphoreux et/ou leurs sels en présence éventuelle de sels métalliques par exemple de fer ou de cuivre dans un milieu de polymérisation qui peut être l'eau, le méthanol, l'éthanol, le propanol, l'isopropanol, les butanols, ou leurs mélanges ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, le xylène, et en présence éventuellement de régulateurs de masse moléculaire encore appelés agents de transfert tels que notamment le mercaptoéthanol, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, les éthers de monopropylène glycol, ou leurs mélanges et analogues.

Ces homopolymères utilisés comme agent d'aide au broyage selon l'invention résultent des divers procédés de polymérisation radicalaire précités de l'acide acrylique ou méthacrylique.

Les copolymères utilisés comme agent d'aide au broyage selon l'invention résultent des divers procédés de copolymérisation radicalaire précités de l'acide acrylique ou méthacrylique avec l'un au moins des monomères choisis parmi l'acide acrylique, l'acide méthacrylique, l'acide itaconique, l'acide crotonique, l'acide fumarique, l'anhydride maléique et/ou l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique et/ou ses sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, les esters des acides acryliques ou méthacryliques tels que notamment l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, l'isobutylène, le diisobutylène, l'acétate de vinyle, le styrène, l'alphaméthylstyrène, le vinylméthyléther, les allyliques tels que notamment l'allylamine et ses dérivés.

Ces homopolymères et/ou copolymères utilisés comme agent d'aide au broyage selon l'invention résultant des divers procédés de polymérisation radicalaire précités peuvent être également traités par tout moyen connu pour l'isoler sous forme de poudre et l'utiliser sous cette forme.

Selon une autre variante, l'homopolymère ou le copolymère issu de la réaction de polymérisation peut, éventuellement avant ou après la réaction de neutralisation, être traité et séparé en plusieurs phases, selon des procédés statiques ou dynamiques connus de l'homme de l'art, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges. L'une des phases correspond alors au polymère utilisé selon l'invention comme agent d'aide au broyage de matières minérales en suspension aqueuse.

Ces homopolymères et/ou copolymères utilisés comme agent d'aide au broyage selon l'invention sont sélectivement neutralisés de telle sorte que le pourcentage molaire de neutralisation des sites acides actifs du polymère par un agent de neutralisation contenant l'ion calcium est compris entre 15 % et 40 % avec un taux molaire de neutralisation des sites acides actifs du polymère par un ou plusieurs agents de neutralisation monofonctionnels et en particulier par un agent de neutralisation contenant l'ion sodium compris entre 7 % et 70 %, un taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium compris entre 0 % et 30 %, et un taux molaire de sites acides actifs non neutralisés compris entre 15 % et 78 %.

Ce pourcentage molaire de neutralisation des sites acides actifs du polymère par un agent de neutralisation contenant l'ion calcium est compris entre 15 % et 40 % avec un taux molaire de neutralisation des sites acides actifs du polymère par un ou plusieurs agents de neutralisation monofonctionnels et en particulier par un agent de neutralisation contenant l'ion sodium préférentiellement compris entre 20 % et 50 %, un taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium compris entre 0 % et 30 %, et un taux molaire de sites acides actifs non neutralisés préférentiellement compris entre 20 % et 40 %.

Ainsi selon l'invention, l'utilisation d'homopolymères et/ou copolymères de l'acide acrylique et/ou méthacrylique avec un ou plusieurs monomères acryliques, vinyliques ou allyliques comme agent d'aide au broyage de pigments et/ou charges minérales en suspension aqueuse se caractérise en ce que lesdits homopolymères et/ou copolymères de l'acide acrylique et/ou méthacrylique avec un ou plusieurs monomères acryliques, vinyliques ou allyliques sont neutralisés de telle sorte que le pourcentage molaire de neutralisation des sites acides actifs du polymère par un agent de neutralisation contenant l'ion calcium est compris entre 15 % et 40 % avec un taux molaire de neutralisation des sites acides actifs du polymère par un ou plusieurs agents de neutralisation monofonctionnels et en particulier par un agent de neutralisation contenant l'ion sodium compris entre 7 % et 70 %, un taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium compris entre 0 % et 30 %, et un taux molaire de sites acides actifs non neutralisés compris entre 15 % et 78 %.

De manière préférentielle, l'utilisation selon l'invention d'homopolymères et/ou copolymères de l'acide acrylique et/ou méthacrylique avec un ou plusieurs monomères acryliques, vinyliques ou allyliques comme agent d'aide au broyage de pigments et/ou charges minérales en suspension aqueuse se caractérise en ce que lesdits homopolymères et/ou copolymères de l'acide acrylique et/ou méthacrylique avec un ou plusieurs monomères acryliques, vinyliques ou allyliques sont neutralisés de telle sorte que le pourcentage molaire de neutralisation des sites acides actifs du polymère par un agent de neutralisation contenant l'ion calcium est compris entre 15 % et 40 % avec un taux molaire de neutralisation des sites acides actifs du polymère par un ou plusieurs agents de neutralisation monofonctionnels et en particulier par un agent de neutralisation contenant l'ion sodium préférentiellement compris entre 20 % et 50 %, un taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium compris entre 0 % et 30 %, et un taux molaire de sites acides actifs non neutralisés préférentiellement compris entre 20 % et 40 %.

Les homopolymères et/ou copolymères destinés à être utilisés selon l'invention comme agent d'aide au broyage dans l'eau des particules minérales sont sélectionnés parmi les homopolymères ou copolymères ayant un poids moléculaire moyen en poids $M_w$ compris entre 1 500 et 50 000, préférentiellement entre 5 000 et 25 000, déterminé par chromatographie par perméation de gel (GPC) aqueuse dont les standards, utilisés comme étalons, appartiennent à une série de polyacrylates de sodium commercialisée par la société Polymer Standards Service sous les noms de PSS-PAA variant de 18K à 2K.

D'autre part, l'utilisation selon l'invention d'une sélection d'homopolymères et/ou copolymères hydrosolubles de l'acide acrylique et/ou méthacrylique avec un ou plusieurs monomères acryliques, vinyliques ou allyliques permet le broyage de substances minérales, notamment de carbonate de calcium, aboutissant à l'obtention de suspensions aqueuses de matières minérales affinées, ayant la capacité de diffuser la lumière visible suffisante et requise par l'utilisateur final permettant d'aboutir à des formulations papetières ou de peinture, telles que notamment les sauces de couchage papetières ou encore la charge de masse du papier, présentant des propriétés d'opacité améliorées.

Ainsi selon l'invention, les suspensions aqueuses de pigments et/ou charges minérales se caractérisent en ce qu'elles contiennent ledit agent d'aide au broyage et en ce qu'elles ont une capacité de diffusion de la lumière visible exprimée par un coefficient de diffusion de la lumière S supérieur à 100 $m^2$/kg pour un poids de couche de 20 $g/m^2$.

Cette capacité de diffusion de la lumière est exprimée par le coefficient de Kubelka-Munk de diffusion de la lumière, déterminé par la méthode bien connue de l'homme du métier décrite dans les publications de Kubelka et Munk (Zeitschrift für Technische Physik 12,539, (1931)), de Kubelka (J.Optical Soc.Am. 38(5),448, (1948) et J.Optical Soc.Am. 44(4),330,(1954)).

Pour ce faire et pour chaque essai, on dispose d'une feuille de papier synthétique vendu par la société Arjo Wiggins Teape sous le nom Synteape.

Avant d'être couchée à l'aide d'une coucheuse de type Hand Coater modèle KC202 et pour chaque essai, cette feuille de papier de dimension 26 cm x 18 cm et avec un poids spécifique de 60 à 65 $g/m^2$ est pesée puis soumise à un rayonnement lumineux de longueur d'onde égale à 457 nm sur une plaque noire au moyen d'un spectrophotomètre Elrepho™ 3000 de Datacolor (Suisse) pour déterminer le facteur de réflectance $R_b$ du papier non couché sur fond noir.

Chacune des suspensions à tester, formulée avec un liant (12 parts de liant styrène-acrylique (Acronal™ S360D) pour 100 g sec de charge minérale à tester) est alors appliquée sur cette feuille de papier pré-pesée à l'aide d'une coucheuse de type Hand Coater modèle KC202.

Chaque feuille de papier ainsi couchée à différents poids de couche compris entre 5 et 50 g/m² est alors soumise à un rayonnement lumineux de longueur d'onde égale à 457 nm au moyen d'un spectrophotomètre Elrepho™ 3000 de Datacolor (Suisse) sur plaque noire pour déterminer le facteur de réflectance du papier sur fond noir $R_0$ et sur une pile d'au moins 10 feuilles de papier non couchée pour déterminer le facteur de réflectance des papiers couchés sur fond blanc $R_1$, r étant le facteur de réflectance de la pile de feuilles de papier non couché.

On détermine alors le facteur de réflectance $R_{sc}$ de la couche seule, sur fond noir, par la formule :

$$R_{sc} = \frac{R_1 . R_b - R_0 . r}{(R_1 - R_0) . r \, R_b + R_b - r} \quad (1)$$

ainsi que la transmission $T_{sc}$ de la couche

$$T_{sc}^2 = \frac{(R_0 - R_{sc})(1 - R_{sc} \, R_b)}{R_b} \quad (2)$$

De ces deux quantités, il est possible de calculer une valeur théorique de réflectance $R_\infty$ pour une couche d'épaisseur infinie donnée par la formule :

$$\frac{1 - T_{sc}^2 + R_{sc}^2}{R_c} = \frac{1 + R_\infty^2}{R_\infty} \quad (3)$$

Ainsi, de cette formule le coefficient de diffusion de la lumière S de chaque pigment étudié peut être calculé pour chaque poids de couche sachant que, pour un poids de couche P,

$$S.P. = \frac{1}{b} \, \coth^{-1} \frac{(1 - a \, R_{sc})}{b \, R_{sc}}$$

où

$$a = 0,5 \left( \frac{1}{R_\infty} + R_\infty \right)$$

et

$$b = 0,5 \left( \frac{1}{R_\infty} - R_\infty \right)$$

Ce coefficient de diffusion de la lumière S est tracé en fonction du poids de couche et la valeur S pour un poids de couche égal à 20 g/m$^2$ est déterminé par interpolation.

Elles se caractérisent également en ce que la charge et/ou pigment est choisi parmi le carbonate de calcium naturel tel que notamment la calcite, la craie ou encore le marbre, le carbonate de calcium synthétique encore appelé carbonate de calcium précipité, les dolomies, l'hydroxyde de magnésium, le gypse, ou encore l'hydroxyde d'aluminium ou leurs mélanges ou toute autre charge et/pu pigment habituellement mis en oeuvre dans le domaine papetier et de la peinture.

Les suspensions aqueuses de charges et/ou pigments selon l'invention, se caractérisent plus particulièrement en ce qu'elles contiennent de 0,05 % à 5 % en poids sec dudit agent par rapport au poids sec total des charges et/ou pigments, et encore plus particulièrement 0,3 % à 1,0 % en poids sec dudit agent par rapport au poids sec total des charges et/ou pigments et en ce qu'elles ont une capacité de diffusion de la lumière visible mesurée par la valeur du coefficient de diffusion de la lumière S supérieure à 100 m$^2$/kg pour un poids de couche de 20 g/m$^2$ mesurée selon la méthode précitée.

En pratique, l'opération de broyage de la substance minérale à affiner consiste à broyer la substance minérale avec un corps broyant en particules très fines dans un milieu aqueux contenant tout ou partie de la quantité de l'agent d'aide au broyage. On forme une suspension aqueuse de la substance minérale à broyer.

Lors de la mise en oeuvre d'une partie de la quantité de l'agent d'aide au broyage, le complément est ajouté en parallèle au cours de l'opération mécanique de broyage.

A la suspension de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2 303 681 qui décrit des éléments broyants formés de 30 à 70 % en poids d'oxyde de zirconium, 0,1 à 5 % d'oxyde d'aluminium et de 5 à 20 % d'oxyde de silicium. Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

L'agent d'aide au broyage selon l'invention est également introduit au sein du mélange formé par la suspension aqueuse de substances minérales et par le corps broyant à raison de 0,05 % à 5 % en poids, et préférentiellement de 0,3 % à 1,0 % en poids de la fraction séchée desdits polymères par rapport à la masse sèche de la substance minérale à affiner.

Le temps nécessaire pour aboutir à une excellente finesse de la substance minérale après broyage varie selon la nature et la quantité des substances minérales à broyer, et selon le mode d'agitation utilisé et la température du milieu pendant l'opération de broyage.

Les suspensions aqueuses ainsi obtenues peuvent être utilisées dans le domaine du papier en charge de masse ou en couchage.

Les compositions de couchage selon l'invention se caractérisent en ce qu'elles contiennent les suspensions aqueuses de matières minérales selon l'invention et en ce qu'elles ont une capacité de diffusion de la lumière visible mesurée par la valeur du coefficient de diffusion de la lumière S supérieure à 100 m$^2$/kg pour un poids de couche de 20 g/m$^2$ mesurée selon la méthode précitée.

Les papiers fabriqués et/ou couchés se caractérisent en ce qu'ils contiennent lesdites suspensions aqueuses de charges et/ou pigments selon l'invention.

Les papiers couchés par la mise en oeuvre de la sauce de couchage selon l'invention se caractérisent en ce qu'ils ont une opacité accrue, c'est-à-dire une opacité supérieure à l'opacité des papiers couchés de l'art antérieur.

La portée et l'intérêt de l'invention seront mieux perçus grâce aux exemples suivants qui ne sauraient être limitatifs.

EXEMPLE 1 :

Cet exemple concerne la sélection de l'agent neutralisant l'homopolymère et /ou copolymère destiné selon l'invention à être utilisé comme agent d'aide au broyage permettant l'obtention de suspension aqueuse de carbonate de calcium naturel à capacité de diffusion de la lumière visible accrue.

Pour chaque essai, on teste les différents agents d'aide au broyage par introduction, selon les quantités indiquées dans chacun des essais, exprimées en pour cent en poids sec par rapport à la masse de carbonate de calcium sec à broyer, de l'agent d'aide au broyage dans une suspension de carbonate de calcium à broyer.

Ce carbonate de calcium naturel à broyer est un marbre de granulométrie telle que le diamètre médian est égal à environ 20 micromètres.

La suspension circule dans un broyeur du type Dyno-Mill™ à cylindre fixe et impulseur tournant, dont le corps broyant est constitué par des billes de corindon de diamètre compris dans l'intervalle 0,6 millimètre à 1,0 millimètre.

Le volume total occupé par le corps broyant est de 1 150 centimètres cubes tandis que sa masse est de 2 900 g.

La chambre de broyage a un volume de 1 400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill™ est munie d'un séparateur de mailles 200 microns permettant de séparer la suspension résultant du broyage et le corps broyant. La température lors de chaque essai de broyage est maintenue à 60°C environ.

A la fin du broyage (To), on récupère dans un flacon un échantillon de la suspension pigmentaire. La granulométrie de cette suspension, égale à 72 % des particules ont un diamètre inférieur à 1 micromètre, est mesurée à l'aide d'un granulomètre Sédigraph™ 5100 de la société Micromeritics.

La concentration finale de la suspension aqueuse est ajustée à 71 % en matière sèche par la mise en oeuvre des méthodes et des moyens d'augmentation de la concentration bien connus de l'homme du métier.

On mesure alors le coefficient de diffusion de la lumière S selon la méthode précédemment décrite.

Essai n° 1 :

Cet essai, qui illustre l'art antérieur, met en oeuvre 0, 50 % en poids sec par rapport au poids sec de carbonate de calcium sec, d'un polyacrylate de sodium totalement neutralisé de poids moléculaire moyen en poids $M_w$ égal à 7 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 92 $m^2$/kg pour un poids de couche de 20 g/$m^2$.

Essai n° 2 :

Cet essai, qui illustre l'art antérieur, met en oeuvre 0, 55 % en poids sec par rapport au poids sec de carbonate de calcium sec, d'un polyacrylate mixte de magnésium et de sodium (50 % magnésium - 50 % sodium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 87 $m^2$/kg pour un poids de couche de 20 g/$m^2$.

Essai n° 3 :

Cet essai, qui illustre l'art antérieur, met en oeuvre 0, 55 % en poids sec par rapport au poids sec de carbonate de calcium sec, d'un polyacrylate mixte de sodium et de calcium (70 % sodium - 30 % calcium en mole) de poids moléculaire moyen en poids $M_w$ égal à 4 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 95 $m^2$/kg pour un poids de couche de 20 g/$m^2$.

Essai n° 4 :

Cet essai, qui illustre un domaine hors de l'invention met en oeuvre 0, 60 % en poids sec par rapport au poids sec de carbonate de calcium sec, d'un polyacrylate de sodium (5 % sodium-95 % carboxylique libre en mole) de poids moléculaire moyen en poids $M_w$ égal à 6 500 déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 93 m$^2$/kg pour un poids de couche de 20 g/m$^2$.

Essai n° 5 :

Cet essai, qui illustre l'invention met en oeuvre 0,55 % en poids sec par rapport au poids sec de carbonate de calcium sec, d'un polyacrylate mixte de sodium-calcium-magnésium (7 % sodium - 30 % calcium -15 % magnésium - 48 % carboxylique libre en mole) de poids moléculaire moyen en poids M$_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 132 m$^2$/kg pour un poids de couche de 20 g/m$^2$.

Essai n° 6 :

Cet essai, qui illustre l'invention met en oeuvre 0,55 % en poids sec par rapport au poids sec de carbonate de calcium sec, d'un polyacrylate mixte de sodium-calcium-magnésium (15 % sodium - 30 % calcium - 15 % magnésium - 40 % carboxylique libre en mole) de poids moléculaire moyen en poids M$_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 130 m$^2$/kg pour un poids de couche de 20 g/m$^2$.

Essai n° 7 :

Cet essai, qui illustre l'invention met en oeuvre 0,55 % en poids sec par rapport au poids sec de carbonate de calcium sec, d'un polyacrylate mixte de sodium-calcium-magnésium (25 % sodium - 30 % calcium - 15 % magnésium - 30 % carboxylique libre en mole) de poids moléculaire moyen en poids M$_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 145 m$^2$/kg pour un poids de couche de 20 g/m$^2$.

Essai n° 8 :

Cet essai, qui illustre un domaine hors de l'invention met en oeuvre 0,55 % en poids sec par rapport au poids sec de carbonate de calcium sec, d'un polyacrylate mixte de sodium et de calcium (7 % sodium - 7 % calcium - 86 % carboxylique libre en mole) de poids moléculaire moyen en poids M$_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K
Le coefficient de diffusion de la lumière S obtenu selon la méthode précédemment décrite est égal à 95 m$^2$/kg pour un poids de couche de 20 g/m$^2$.

Essai n° 9 :

Cet essai, qui illustre l'invention met en oeuvre 0,55 % en poids sec par rapport au poids sec de carbonate de calcium sec, d'un polyacrylate mixte de sodium et de calcium (7 % sodium - 15 % calcium - 78 % carboxylique libre en mole) de poids moléculaire moyen en poids M$_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 125 m$^2$/kg pour un poids de couche de 20 g/m$^2$.

Essai n° 10 :

Cet essai, qui illustre l'invention met en oeuvre 0,55 % en poids sec par rapport au poids sec de carbonate de calcium sec, d'un polyacrylate mixte de sodium et de calcium (7 % sodium - 40 % calcium - 53 % carboxylique libre en mole) de poids moléculaire moyen en poids M$_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 140 $m^2/kg$ pour un poids de couche de 20 $g/m^2$.

Essai n° 11 :

Cet essai, qui illustre l'invention met en oeuvre 0,55 % en poids sec par rapport au poids sec de carbonate de calcium sec, d'un polyacrylate mixte de sodium et de calcium (15 % sodium - 30 % calcium - 55 % carboxylique libre en mole) de poids moléculaire en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 140 $m^2/kg$ pour un poids de couche de 20 $g/m^2$.

Essai n° 12 :

Cet essai, qui illustre l'invention met en oeuvre 0,55 % en poids sec par rapport au poids sec de carbonate de calcium sec, d'un polyacrylate mixte de sodium-calcium-magnésium (15 % sodium - 30 % calcium - 15 % magnésium - 40 % carboxylique libre en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 130 $m^2/kg$ pour un poids de couche de 20 $g/m^2$.

Essai n° 13 :

Cet essai, qui illustre l'invention met en oeuvre 0,65 % en poids sec par rapport au poids sec de carbonate de calcium sec, d'un polyacrylate mixte de sodium-calcium-magnésium (15 % sodium - 30 % calcium - 30 % magnésium - 25 % carboxylique libre en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 143 $m^2/kg$ pour un poids de couche de 20 $g/m^2$.

La lecture des différents résultats permet de constater que, pour obtenir les propriétés précitées, la sélection du pourcentage molaire de neutralisation des sites acides actifs du polymère par un agent de neutralisation contenant l'ion calcium doit être compris entre 15 % et 40 %, le taux molaire de neutralisation des sites acides actifs du polymère par un ou plusieurs agents monofonctionnel étant compris entre 7 % et 70 %, le taux molaire de neutralisation des sites acides actifs du polymère par un agent de neutralisation contenant l'ion magnésium étant compris entre 0 % et 30 %, le taux molaire de sites acides actifs non neutralisés étant compris entre 15 % et 78 %.

EXEMPLE 2 :

Cet exemple concerne le poids moléculaire de l'homopolymère et /ou copolymère destiné selon l'invention à être utilisé comme agent d'aide au broyage permettant l'obtention de suspension aqueuse de carbonate de calcium naturel à capacité de diffusion de la lumière visible accrue.

Pour chaque essai, on teste les différents agents d'aide au broyage avec le même mode opératoire et le même matériel que dans l'exemple 1.

Essai n° 14 :

Cet essai, qui illustre l'invention met en oeuvre 0,35 % en poids sec par rapport au poids sec de carbonate de calcium sec, d'un polyacrylate mixte de sodium et calcium (50 % sodium - 30 % calcium - 20 % carboxylique libre en mole) de poids moléculaire moyen en poids $M_w$ égal à 7 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 145 $m^2/kg$ pour un poids de couche de 20 $g/m^2$.

Essai n° 15 :

Cet essai, qui illustre l'invention met en oeuvre 0,23 % en poids sec par rapport au poids sec de carbonate de calcium sec, d'un polyacrylate mixte de sodium et de calcium (55 % sodium - 30 % calcium - 15 % carboxylique libre en mole) de poids moléculaire moyen en poids $M_w$ égal à 7 750, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 145 $m^2$/kg pour un poids de couche de 20 g/$m^2$.

Essai n° 16 :

Cet essai, qui illustre l'invention met en oeuvre 0,23 % en poids sec par rapport au poids sec de carbonate de calcium sec, d'un polyacrylate mixte de sodium-calcium-magnésium (50 % sodium - 15 % calcium - 15 % magnésium - 20 % carboxylique libre en mole) de poids moléculaire moyen en poids $M_w$ égal à 10 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 155 $m^2$/kg pour un poids de couche de 20 g/$m^2$.

Essai n° 17 :

Cet essai, qui illustre l'invention met en oeuvre 0,45 % en poids sec par rapport au poids sec de carbonate de calcium sec, d'un polyacrylate mixte de sodium-calcium-magnésium (25 % sodium - 35 % calcium - 10 % magnésium - 30 % carboxylique libre en mole) de poids moléculaire moyen en poids $M_w$ égal à 6 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 145 $m^2$/kg pour un poids de couche de 20 g/$m^2$.

Essai n° 18 :

Cet essai, qui illustre l'invention met en oeuvre 0,30 % en poids sec par rapport au poids sec de carbonate de calcium sec, d'un polyacrylate mixte de sodium et de calcium (50 % sodium - 30 % calcium - 20 % carboxylique libre en mole) de poids moléculaire moyen en poids $M_w$ égal à 17 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 125 $m^2$/kg pour un poids de couche de 20 g/$m^2$.

Essai n° 19 :

Cet essai, qui illustre l'invention met en oeuvre 0,50 % en poids sec par rapport au poids sec de carbonate de calcium sec, d'un copolymère acide acrylique- acide acrylamido méthyl propane sulfonique (respectivement 95 % - 5 % en poids) mixte de sodium - calcium - magnésium (25 % carboxylique libre- 35 % sodium - 25 % calcium- 15 % magnésium en mole) de poids moléculaire moyen en poids $M_w$ égal à 10 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.
Le coefficient de diffusion de la lumière S obtenu selon la méthode précédemment décrite est égal à 135 $m^2$/kg pour un poids de couche de 20 g/$m^2$.

Essai n° 20 :

Cet essai, qui illustre l'invention met en oeuvre 0,50 % en poids sec par rapport au poids sec de carbonate de calcium sec, d'un copolymère acide acrylique- acrylamide (respectivement 90 % - 10 % en poids) mixte de sodium - calcium - magnésium (25 % carboxylique libre- 35 % sodium - 25 % calcium- 15 % magnésium en mole) de poids moléculaire moyen en poids $M_w$ égal à 10 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal 150 m$^2$/kg pour un poids de couche de 20 g/m$^2$.

Essai n° 21 :

Cet essai, qui illustre l'invention met en oeuvre 0,55 % en poids sec par rapport au poids sec de carbonate de calcium sec, d'un copolymère acide acrylique- acide méthacrylique (respectivement 85 % - 15 % en poids) mixte de sodium - calcium - magnésium (25 % carboxylique libre- 35 % sodium - 25 % calcium- 15 % magnésium en mole) de poids moléculaire moyen en poids M$_w$ égal à 10 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 137 m$^2$/kg pour un poids de couche de 20 g/m$^2$.

Essai n° 22 :

Cet essai, qui illustre l'invention met en oeuvre 0,55 % en poids sec par rapport au poids sec de carbonate de calcium sec, d'un copolymère acide acrylique- acrylate d'éthyle (respectivement 95 % - 5 % en poids) mixte de sodium - calcium - magnésium (25 % carboxylique libre- 35 % sodium - 25 % calcium- 15 % magnésium en mole) de poids moléculaire moyen en poids M$_w$ égal à 10 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 129 m$^2$/kg pour un poids de couche de 20 g/m$^2$.

Essai n° 23 :

Cet essai, qui illustre l'invention met en oeuvre 0,55 % en poids sec par rapport au poids sec de carbonate de calcium sec, d'un copolymère acide acrylique- acrylate de butyle (respectivement 95 % - 5 % en poids) mixte de sodium - calcium - magnésium (25 % carboxylique libre- 35 % sodium - 25 % calcium- 15 % magnésium en mole) de poids moléculaire moyen en poids M$_w$ égal à 10 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S obtenu selon la méthode précédemment décrite est égal à 123 m$^2$/kg pour un poids de couche de 20 g/m$^2$.

Essai n° 24 :

Cet essai, qui illustre l'invention met en oeuvre 0,55 % en poids sec par rapport au poids sec de carbonate de calcium sec, d'un copolymère acide acrylique- phosphate de méthacrylate d'éthylène glycol (respectivement 95 % - 5 % en poids) mixte de sodium - calcium - magnésium (25 % carboxylique libre- 35 % sodium - 25 % calcium- 15 % magnésium en mole) de poids moléculaire moyen en poids M$_w$ égal à 10 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

Le coefficient de diffusion de la lumière S, obtenu selon la méthode précédemment décrite est égal à 128 m$^2$/kg pour un poids de couche de 20 g/m$^2$.

La lecture des différents résultats permet de constater que, pour obtenir les propriétés précitées, le poids moléculaire moyen en poids M$_w$ des homopolymères ou copolymères utilisés selon l'invention doit être compris entre 1 500 et 50 000, préférentiellement entre 5 000 et 25 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

**Revendications**

1.  Procédé de préparation d'une suspension aqueuse de matières minérales, présentant des propriétés améliorées notamment pour les sauces de couchage de papier, notamment pour augmenter considérablement le « facteur S », **caractérisé en ce que** :

a) on prépare une suspension aqueuse de départ des matières minérales que l'on mélange avec un corps broyant en particules très fines dans un milieu aqueux contenant tout ou partie d'un agent d'aide au broyage, ledit agent d'aide au broyage étant choisi parmi les homopolymères et/ou copolymères de l'acide acrylique et/ou méthacrylique avec un ou plusieurs monomères acryliques, vinyliques ou allyliques comme agent d'aide au broyage de matières minérales en suspension aqueuse et **caractérisé en ce que** lesdits homopolymères et/ou copolymères de l'acide acrylique et/ou méthacrylique avec un ou plusieurs monomères acryliques, vinyliques ou allyliques sont neutralisés de telle sorte que le pourcentage molaire de neutralisation des sites acides actifs du polymère par un agent de neutralisation contenant l'ion calcium est compris entre 15 % et 40 % avec un taux molaire de neutralisation des sites acides actifs du polymère par un ou plusieurs agents de neutralisation monofonctionnels, contenant très particulièrement l'ion sodium, compris entre 7 % et 70 %, un taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium compris entre 0 % et 30 %, et un taux molaire de sites acides actifs non neutralisés compris entre 15 % et 78 % ;

b) on effectue le broyage de cette suspension de départ éventuellement avec ajout de complément d'agent d'aide au broyage ;

c) on sépare en sortie du broyeur le corps broyant ;

d) on augmente la concentration de la suspension de matières minérales obtenues ;

et **en ce que** lesdits homopolymères et/ou copolymères de l'acide acrylique et/ou méthacrylique avec un ou plusieurs monomères acryliques, vinyliques ou allyliques ont un poids moléculaire moyen en poids $M_w$ compris entre 1 500 et 50 000, préférentiellement entre 5 000 et 25 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K ;

et **en ce que** ladite suspension aqueuse a une capacité de diffusion de la lumière visible mesurée par la valeur du coefficient de diffusion de la lumière S supérieure à 100 $m^2$/kg pour un poids de couche de 20 $g/m^2$.

**2.** Procédé selon la revendication 1 **caractérisé en ce que** l'on augmente la concentration de ladite suspension de matières minérales jusqu'à ajustement à 71% en poids de matières sèches.

**3.** Procédé selon la revendication 1 **caractérisé en ce que** lesdits homopolymères et/ou copolymères de l'acide acrylique et/ou méthacrylique avec un ou plusieurs monomères acryliques, vinyliques ou allyliques sont neutralisés de telle sorte que le pourcentage molaire de neutralisation des sites acides actifs du polymère par un agent de neutralisation contenant l'ion calcium est compris entre 15 % et 40 % avec un taux molaire de neutralisation des sites acides actifs du polymère par un ou plusieurs agents de neutralisation monofonctionnels compris entre 20 % et 50 %, un taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium compris entre 0 % et 30 %, et un taux molaire de sites acides actifs non neutralisés compris entre 20 % et 40 %.

**4.** Procédé selon l'une des revendications 1 à 3 **caractérisé en ce que** le ou les agents de neutralisation monofonctionnels sont choisis parmi les hydroxydes des cations alcalins, en particulier le sodium et le potassium, ou encore le lithium, l'ammoniaque, ou bien les amines primaires ou secondaires aliphatiques et/ou cycliques telles que les éthanolamines, la mono et diéthylamine ou encore la cyclohexylamine et sont très particulièrement choisis parmi les composés contenant l'ion sodium.

**5.** Procédé selon l'une des revendications 1 à 4 **caractérisé en ce que** ledit agent est un homopolymère de l'acide acrylique ou méthacrylique.

**6.** Procédé selon l'une des revendications 1 à 4 **caractérisé en ce que** ledit agent est un copolymère hydrosoluble de l'acide acrylique ou méthacrylique avec un ou plusieurs monomères acryliques, vinyliques ou allyliques choisi parmi l'acide acrylique, l'acide méthacrylique, l'acide itaconique, l'acide crotonique, l'acide fumarique, l'anhydride maléique et/ou l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique et/ou ses sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, les esters des acides acryliques ou méthacryliques tels que l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, l'isobutylène, le diisobutylène, l'acétate de vinyle, le styrène, l'alphaméthylstyrène, le vinylméthyléther, les allyliques tels que l'allylamine et ses dérivés.

7. Procédé selon l'une des revendications 1 à 6 **caractérisé en ce que** l'homopolymère ou le copolymère issu de la réaction de polymérisation peut, éventuellement avant ou après la réaction de neutralisation, être traité et séparé en plusieurs phases, selon des procédés statiques ou dynamiques, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

8. Procédé selon l'une des revendications 1 à 7 **caractérisé en ce que** ledit agent est sous forme de poudre.

9. Procédé selon l'une des revendications 1 à 8 **caractérisé en ce que** ledit agent est introduit à raison de 0,05 % à 5 % en poids sec, et préférentiellement de 0,3 % à 1,0 % en poids sec par rapport au poids sec de matière minérale.

10. Suspension aqueuse de particules minérales **caractérisé en ce qu'**elle contient ledit agent d'aide au broyage mis en oeuvre dans le procédé selon l'une quelconque des revendications 1 à 9 et **en ce qu'**elle a une capacité de diffusion de la lumière visible mesurée par la valeur du coefficient de diffusion de la lumière S supérieure à 100 $m^2$/kg pour un poids de couche de 20 g/$m^2$;
    et **en ce que** ledit agent d'aide au broyage est choisi parmi les homopolymères et/ou copolymères de l'acide acrylique et/ou méthacrylique avec un ou plusieurs monomères acryliques, vinyliques ou allyliques comme agent d'aide au broyage de matières minérales en suspension aqueuse et **caractérisé en ce que** lesdits homopolymères et/ou copolymères de l'acide acrylique et/ou méthacrylique avec un ou plusieurs monomères acryliques, vinyliques ou allyliques sont neutralisés de telle sorte que le pourcentage molaire de neutralisation des sites acides actifs du polymère par un agent de neutralisation contenant l'ion calcium est compris entre 15 % et 40 % avec un taux molaire de neutralisation des sites acides actifs du polymère par un ou plusieurs agents de neutralisation monofonctionnels, contenant très particulièrement l'ion sodium, compris entre 7 % et 70 %, un taux molaire de neutralisation des sites acides actifs du polymère par un agent de neutralisation contenant l'ion magnésium, baryum, zinc, aluminium ou une amine difonctionnelle ou leurs mélanges et en particulier par un agent de neutralisation contenant l'ion magnésium compris entre 0 % et 30 %, et un taux molaire de sites acides actifs non neutralisés compris entre 15 % et 78 %, et **en ce que** lesdits homopolymères et/ou copolymères de l'acide acrylique et/ou méthacrylique avec un ou plusieurs monomères acryliques, vinyliques ou allyliques ont un poids moléculaire moyen en poids $M_w$ compris entre 1 500 et 50 000, préférentiellement entre 5 000 et 25 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

11. Suspension aqueuse de particules minérales selon la revendication 10 **caractérisé en ce qu'**elle contient de 0,05 % à 5 % en poids sec, par rapport au poids sec de matière minérale, de l'agent d'aide au broyage mis en oeuvre dans le procédé selon l'une quelconque des revendications 1 à 9, préférentiellement de 0,3 % à 1,0 % en poids sec, par rapport au poids sec de matière minérale, et **en ce qu'**elle a une capacité de diffusion de la lumière visible mesurée par la valeur du coefficient de diffusion de la lumière S supérieure à 100 $m^2$/kg pour un poids de couche de 20 g/$m^2$.

12. Suspension aqueuse de particules minérales selon l'une des revendications 10 ou 11 **caractérisé en ce que** les particules minérales sont choisies parmi le carbonate de calcium naturel tel que la calcite, la craie ou encore le marbre, le carbonate de calcium synthétique encore appelé carbonate de calcium précipité, les dolomies, l'hydroxyde de magnésium, le gypse, ou encore l'hydroxyde d'aluminium ou leurs mélanges.

13. Utilisation du produit sous forme de suspension aqueuse selon l'une quelconque des revendications 10 à 12 dans les domaines de la charge de masse et du couchage du papier ainsi que de la peinture.

14. Sauce de couchage papetière **caractérisée en ce qu'**elle contient le produit sous forme de suspension aqueuse selon l'une quelconque des revendications 10 à 12 et **en ce qu'**elle a une capacité de diffusion de la lumière visible mesurée par la valeur du coefficient de diffusion de la lumière S supérieure à 100 m$^2$/kg pour un poids de couche de 20 g/m$^2$.

**Patentansprüche**

1. Verfahren zur Herstellung einer wässrigen Suspension mineralischer Stoffe, die verbesserte Eigenschaften aufweist, insbesondere für Papierstreichfarben, insbesondere zur erheblichen Verbesserung des "Faktors S", **dadurch gekennzeichnet, dass**:

   a) eine wässrige Ausgangssuspension der mineralischen Stoffe hergestellt wird, welche in einem wässrigen Medium, das einen Teil und die Gesamtheit eines Mahlhilfsmittels enthält, mit einem Mahlkörper aus sehr feinen Partikeln vermischt wird, wobei das Mahlhilfsmittel aus den Homopolymeren und/oder Copolymeren von Acryl- und/oder Methacrylsäure mit einem oder mehreren Acryl-, Vinyl- oder Allylmonomeren als Mahlhilfsmittel für mineralische Stoffe in wässriger Suspension ausgewählt ist und **dadurch gekennzeichnet ist, dass** die Homopolymere und/oder Copolymere von Acryl- und/oder Methacrylsäure mit einem oder mehreren Acryl-, Vinyl- oder Allylmonomeren derart neutralisiert sind, dass der molare Neutralisierungsprozentsatz der aktiven sauren Stellen des Polymers durch ein Neutralisierungsmittel, welches das Calciumion enthält, im Bereich von 15 % bis 40 % liegt, mit einem molaren Anteil der Neutralisierung der aktiven sauren Stellen des Polymers durch ein oder mehrere monofunktionelle Neutralisierungsmittel, welche ganz besonders das Natriumion enthalten, im Bereich von 7 % bis 70 %, einem molaren Anteil der Neutralisierung der aktiven sauren Stellen des Polymers durch ein Neutralisierungsmittel, welches das Magnesium-, Barium-, Zink-, Aluminiumion oder ein bifunktionelles Amin oder deren Mischungen enthält, und insbesondere durch ein Neutralisierungsmittel, welches das Magnesiumion enthält, im Bereich von 0 bis 30 %, und einem molaren Anteil aktiver saurer Stellen, die nicht neutralisiert sind, im Bereich von 15 % bis 78 %;
   b) diese Ausgangssuspension vermahlen wird, wobei möglicherweise ergänzend weiteres Mahlhilfsmittel zugesetzt wird;
   c) ausgangsseitig des Mahlwerks der Mahlkörper abgetrennt wird;
   d) die Konzentration der Suspension an den erhaltenen mineralischen Stoffen erhöht wird;

   und dadurch, dass die Homopolymere und/oder Copolymere der Acryl- und/oder Methacrylsäure mit einem oder mehreren Acryl-, Vinyl- oder Allylmonomeren ein Gewichtsmittel des Molekulargewichts M$_w$ im Bereich von 1.500 bis 50.000, vorzugsweise im Bereich von 5.000 bis 25.000, haben, wobei die Bestimmung mittels wässriger GPC erfolgt, wobei die Standards, welche zur Kalibrierung verwendet werden, Bestandteil einer Reihe von Natriumpolyacrylaten sind, die von der Firma Polymer Standards Service unter den Bezeichnungen PSS-PAA vertrieben wird und den Bereich von 18K bis 2K abdeckt;
   und dadurch, dass die wässrige Suspension eine Fähigkeit zur Streuung des sichtbaren Lichts hat, die über den Wert des Lichtstreuungskoeffizienten S gemessen wird und bei einem Strichgewicht von 20 g/m$^2$ mehr als 100 m$^2$/kg beträgt.

2. Verfahren nach Anspruch 1, **dadurch gekennzeichnet, dass** die Konzentration der Suspension an mineralischen Stoffen erhöht wird, bis sie auf einen Trockenmassegehalt von 71 Gewichts-% eingestellt ist.

3. Verfahren nach Anspruch 1, **dadurch gekennzeichnet, dass** die Homopolymere und/oder Copolymere der Acryl- und/oder Methacrylsäure mit einem oder mehreren Acryl-, Vinyl- oder Allylmonomeren derart neutralisiert sind, dass der molare Neutralisierungsprozentsatz der aktiven sauren Stellen des Polymers durch ein Neutralisierungsmittel, welches das Calciumion enthält, im Bereich von 15 % bis 40 % liegt, mit einem molaren Anteil der Neutralisierung der aktiven sauren Stellen des Polymers durch ein oder mehrere monofunktionelle Neutralisierungsmittel im Bereich von 20 % bis 50 %, einem molaren Anteil der Neutralisierung der aktiven sauren Stellen des Polymers durch ein Neutralisierungsmittel, welches das Magnesium-, Barium-, Zink-, Aluminiumion oder ein bifunktionelles Amin oder deren Mischungen enthält, und insbesondere durch ein Neutralisierungsmittel, welches das Magnesiumion enthält, im Bereich von 0 bis 30 %, und einem molaren Anteil aktiver saurer Stellen, die nicht neutralisiert sind, im Bereich von 20 % bis 40 %.

4. Verfahren nach einem der Ansprüche 1 bis 3, **dadurch gekennzeichnet, dass** die monofunktionellen Neutralisierungsmittel aus den Hydroxiden der Alkalikationen, insbesondere von Natrium, Kalium oder auch Lithium, aus Ammoniumhydroxid oder auch aus den aliphatischen und/oder cyclischen primären oder sekundären Aminen wie beispielsweise den Ethanolaminen, Mono- und Diethylamin oder auch Cyclohexylamin oder deren Mischungen ausgewählt sind, wobei sie ganz besonders aus den Verbindungen ausgewählt sind, die das Natriumion enthalten.

5. Verfahren nach einem der Ansprüche 1 bis 4, **dadurch gekennzeichnet, dass** das Mittel ein Homopolymer der Acryl- oder Methacrylsäure ist.

6. Verfahren nach einem der Ansprüche 1 bis 4, **dadurch gekennzeichnet, dass** das Mittel ein wasserlösliches Copolymer der Acryl- oder Methacrylsäure mit einem oder mehreren Acryl-, Vinyl- oder Allylmonomeren ist, ausgewählt aus Acrylsäure, Methacrylsäure, Itaconsäure, Crotonsäure, Fumarsäure, Maleinsäureanhydrid und/oder 2-Acrylamido-2-methyl-1-propansulfonsäure in Form der freien Säure oder in teilweise neutralisierter Form, 2-Methacrylamido-2-methyl-1-propansulfonsäure in Form der freien Säure oder in teilweise neutralisierter Form, 3-Methacrylamido-2-hydroxy-1-propansulfonsäure in Form der freien Säure oder in teilweise neutralisierter Form, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylsulfonsäure, Styrolsulfonsäure und/oder ihren Salzen, Vinylsulfonsäure, Natriummethallylsulfonat, Sulfopropylacrylat oder -methacrylat, Sulfomethylacrylamid, Sulfomethylmethacrylamid oder auch aus Acrylamid, Methylacrylamid, den Estern von Acryl- oder Methacrylsäure wie insbesondere Ethylacrylat, Butylacrylat, Methylmethacrylat, dem Phosphat von Ethylen- oder Propylenglycolacrylat oder - methacrylat oder auch aus Vinylpyrrolidon, Vinylcaprolactam, Isobutylen, Diisobutylen, Vinylacetat, Styrol, alpha-Methylstyrol, Vinylmethylether, den Allylverbindungen wie etwa Allylamin und dessen Derivaten.

7. Verfahren nach einem der Ansprüche 1 bis 6, **dadurch gekennzeichnet, dass** das Homopolymer oder das Copolymer, welches aus der Polymerisationsreaktion hervorgeht, vor oder nach der Neutralisierungsreaktion möglicherweise, gemäß statischen oder dynamischen Verfahren, mit einem oder mehreren polaren Lösemitteln, das/die der Gruppe angehört/angehören, welche aus Wasser, Methanol, Ethanol, Propanol, Isopropanol, den Butanolen, Aceton, Tetrahydrofuran oder deren Mischungen besteht, behandelt und in mehrere Phasen aufgetrennt werden kann.

8. Verfahren nach einem der Ansprüche 1 bis 7, **dadurch gekennzeichnet, dass** das Mittel pulverförmig ist.

9. Verfahren nach einem der Ansprüche 1 bis 8, **dadurch gekennzeichnet, dass** das Mittel zu 0,05 % bis 5 % nach Trockenmasse zugesetzt wird, und vorzugsweise zu 0,3 % bis 1,0 % nach Trockenmasse, bezogen auf die Trockenmasse an mineralischem Stoff.

10. Wässrige Suspension mineralischer Partikel, **dadurch gekennzeichnet, dass** sie das Mahlhilfsmittel enthält, welches in dem Verfahren nach einem beliebigen der Ansprüche 1 bis 9 eingesetzt wird, und dass sie eine Fähigkeit zur Streuung des sichtbaren Lichts hat, die über den Wert des Lichtstreuungskoeffizienten S gemessen wird und bei einem Strichgewicht von 20 g/m$^2$ mehr als 100 m$^2$/kg beträgt.
und dadurch, dass das Mahlhilfsmittel aus den Homopolymeren und/oder Copolymeren von Acryl- und/oder Methacrylsäure mit einem oder mehreren Acryl, Vinyl- oder Allylmonomeren als Mahlhilfsmittel für mineralische Stoffe in wässriger Suspension ausgewählt ist und **dadurch gekennzeichnet ist, dass** die Homopolymere und/oder Copolymere von Acryl- und/oder Methacrylsäure mit einem oder mehreren Acryl-, Vinyl- oder Allylmonomeren derart neutralisiert sind, dass der molare Neutralisierungsprozentsatz der aktiven sauren Stellen des Polymers durch ein Neutralisierungsmittel, welches das Calciumion enthält, im Bereich von 15 % bis 40 % liegt, mit einem molaren Anteil der Neutralisierung der aktiven sauren Stellen des Polymers durch ein oder mehrere monofunktionelle Neutralisierungsmittel, welche ganz besonders das Natriumion enthalten, im Bereich von 7 % bis 70 %, einem molaren Anteil der Neutralisierung der aktiven sauren Stellen des Polymers durch ein Neutralisierungsmittel, welches das Magnesium-, Barium-, Zink-, Aluminiumion oder ein bifunktionelles Amin oder deren Mischungen enthält, und insbesondere durch ein Neutralisierungsmittel, welches das Magnesiumion enthält, im Bereich von 0 bis 30 %, und einem molaren Anteil aktiver saurer Stellen, die nicht neutralisiert sind, im Bereich von 15 % bis 78 %,
und dadurch, dass die Homopolymere und/oder Copolymere der Acryl- und/oder Methacrylsäure mit einem oder mehreren Acryl-, Vinyl- oder Allylmonomeren ein Gewichtsmittel des Molekulargewichts $M_w$ im Bereich von 1.500 bis 50.000, vorzugsweise im Bereich von 5.000 bis 25.000, haben, wobei die Bestimmung mittels wässriger GPC erfolgt, wobei die Standards, welche zur Kalibrierung verwendet wurden, Bestandteil einer Reihe von Natriumpolyacrylaten sind, die von der Firma Polymer Standards Service unter den Bezeichnungen PSS-PAA vertrieben wird und den Bereich von 18K bis 2K abdeckt.

11. Wässrige Suspension mineralischer Partikel nach Anspruch 10, **dadurch gekennzeichnet, dass** sie 0,05 % bis 5 % nach Trockenmasse, bezogen auf die Trockenmasse an mineralischem Stoff, des Mahlhilfsmittels enthält, welches in dem Verfahren nach einem beliebigen der Ansprüche 1 bis 9 eingesetzt wird, vorzugsweise 0,3 % 1,0 % nach Trockenmasse, bezogen auf die Trockenmasse an mineralischem Stoff, und dass sie eine Fähigkeit zur Streuung des sichtbaren Lichts hat, die über den Wert des Lichtstreuungskoeffizienten S gemessen wird und bei einem Strichgewicht von 20 g/m$^2$ mehr als 100 m$^2$/kg beträgt.

12. Wässrige Suspension von mineralischen Partikeln nach einem der Ansprüche 10 oder 11, **dadurch gekennzeichnet, dass** die mineralischen Partikel aus natürlichem Calciumcarbonat wie etwa Calcit, Kreide oder auch Marmor, aus synthetischem Calciumcarbonat, das auch als gefälltes Calciumcarbonat bezeichnet wird, aus Dolomitgesteinmaterialien, aus Magnesiumhydroxid, aus Gips oder auch aus Aluminiumhydroxid oder aus deren Mischungen ausgewählt sind.

13. Verwendung des Produkts in Form einer wässrigen Suspension nach einem beliebigen der Ansprüche 10 bis 12 in den Bereichen der gewichtserhöhenden Füllstoffe und des Streichens von Papier sowie der Anstrichmittel.

14. Papierstreichfarbe, **dadurch gekennzeichnet, dass** sie das Produkt in Form einer wässrigen Suspension nach einem beliebigen der Ansprüche 10 bis 12 enthält, und dass sie eine Fähigkeit zur Streuung des sichtbaren Lichts hat, die über den Wert des Lichtstreuungskoeffizienten S gemessen wird und bei einem Strichgewicht von 20 g/m$^2$ mehr als 100 m$^2$/kg beträgt.

## Claims

1. Process for the preparation of an aqueous suspension of mineral substances with improved properties including those for paper coating colors, notably to dramatically increase the "S factor", **characterized in that**:

   a) a starting aqueous suspension of mineral substances is prepared which is mixed with a very fine particle grinding media in an aqueous medium containing all or part of a grinding aid agent, the said grinding aid agent being selected from the homopolymers and/or copolymers of acrylic and/or methacrylic acid with one or more acrylic, vinylic or allylic monomers as a grinding aid agent for mineral substances in an aqueous suspension, and **characterized in that** said homopolymers and/or copolymers of acrylic and/or methacrylic acid with one or more acrylic, vinylic or allylic monomers are neutralized in such a way that the percent molar neutralization of the active acid sites of the polymer by a neutralizing agent containing the calcium ion is between 15% and 40% with a molar neutralization rate of the active acid sites of the polymer by one or more monofunctional neutralizing agents, containing very particularly the sodium ion, between 7% and 70%, a molar neutralization rate of the active acid sites of the polymer by a neutralizing agent containing the magnesium, barium, zinc, aluminum or a bifunctional amine ion or mixtures thereof, and in particular by a neutralizing agent containing the magnesium ion between 0% and 30%, and a molar rate of the non-neutralized active acid sites between 15% and 78%;
   b) the grinding of this starting suspension is possibly performed with the addition of additional grinding aid agent;
   c) the grinding media is separated on coming out of the grinder;
   d) the concentration of the suspension of mineral substances obtained is increased;

   and **in that** the said homopolymers and/or copolymers of acrylic and/or methacrylic acid with one or more acrylic, vinylic or allylic monomers have a weight-average molecular weight $M_w$ between 1,500 and 50,000, preferentially between 5,000 and 25,000, determined by aqueous GPC whose standards belong to a series of sodium polyacrylates marketed by the Polymer Standards Service Company under the names PSS-PAA ranging from 18K to 2K; and **in that** the said aqueous suspension has a visible light diffusion capacity measured by the value of the light diffusion coefficient S greater than 100 m$^2$/kg for a coating weight of 20 g/m$^2$.

2. Process according to claim 1 **characterized in that** the concentration of the said suspension of mineral substances is increased up to be adjusted to 71% by weight of dry matter.

3. Process according to claim 1 **characterized in that** said homopolymers and/or copolymers of acrylic and/or methacrylic acid with one or more acrylic, vinylic or allylic monomers are neutralized so that the percent molar neutralization of the active acid sites of the polymer by a neutralizing agent containing the calcium ion is between 15% and 40% with a molar neutralization rate of the active acid sites of the polymer by one or more monofunctional neutralizing agents between 20% and 50%, a molar neutralization rate of the active acid sites of the polymer by a neutralizing agent containing the magnesium, barium, zinc, aluminum or bifunctional amine ion or mixtures thereof, and in particular, by a neutralizing agent containing between 0% and 30% of the magnesium ion, and a molar rate of non-neutralized active acid sites between 20% and 40%.

4.  Process according to any one of claims 1 to 3 **characterized in that** the monofunctional neutralizing agents are selected from the hydroxides of the alkali cations, especially sodium and potassium, or lithium, ammonia, or the primary or secondary aliphatic and/or cyclic amines such as the ethanolamines, mono and diethylamine or cyclohexylamine, and are very specifically selected from compounds containing the sodium ion.

5.  Process according to any one of claims 1 to 4 **characterized in that** said agent is a homopolymer of acrylic or methacrylic acid.

6.  Process according to any one of claims 1 to 4 **characterized in that** said agent is a water soluble copolymer of acrylic or methacrylic acid with one or more acrylic, vinylic or allylic monomers chosen from among acrylic acid, methacrylic acid, itaconic acid, crotonic acid, fumaric acid, maleic anhydride and/or 2-acrylamido-2-methyl-1-propane sulphonic acid in the acidic or partially neutralized form, 2-methacrylamido-2-methyl-1-propane sulfonic acid in the acidic or partially neutralized form, 3-methacrylamido-2-hydroxy-1-propane sulfonic acid in the acidic or partially neutralized form, allylsulphonic acid, methallylsulphonic acid, allyloxybenzene sulphonic acid, methallyloxybenzene sulphonic acid, 2-hydroxy-3-(2-propenyloxy)propane sulphonic acid, 2-methyl-2-propene-1-sulphonic acid, ethylene sulphonic acid, propene sulphonic acid, 2-methyl sulphonic acid, styrene sulphonic acid and/or its salts, vinyl sulphonic acid, sodium methallylsulfonate, sulphopropyl acrylate or methacrylate, sulfomethylacrylamide, sulphomethylmethacrylamide or among acrylamide, methacrylamide, the acrylic or methacrylic acid esters such as ethyl acrylate, butyl acrylate, methyl methacrylate, ethylene or propylene glycol acrylate or methacrylate phosphate, or even among vinylpyrrolidone, vinylcaprolactame, isobutylene, diisobutylene, vinyl acetate, styrene, alphamethylstyrene, vinylmethylether, the allylics such as allylamine and its derivatives.

7.  Process according to one of claims 1 to 6 **characterized in that** the homopolymer or copolymer resulting from the polymerization reaction can, possibly before or after the neutralization reaction, be treated and separated into several phases according to static or dynamic processes, by one or more polar solvents preferentially belonging to the group consisting of water, methanol, ethanol, propanol, isopropanol, the butanols, acetone, tetrahydrofuran or their mixtures.

8.  Process according to any one of claims 1 to 7 **characterized in that** said agent is in the form of powder.

9.  Process according to any one of claims 1 to 8 **characterized in that** said agent is introduced at a rate of 0.05% to 5% by dry weight, and preferentially from 0.3% to 1.0% by dry weight relative to the dry weight of the mineral substance.

10. Aqueous suspension of mineral particles **characterized in that** it contains the said grinding aid agent used in the process according to any of claims 1 to 9 and **in that** it has a visible light diffusion capacity measured by the value of the light diffusion coefficient S that is greater than 100 m$^2$/kg for a coating weight of 20 g/m$^2$ and **in that** the said grinding aid agent is chosen from among the homopolymers and/or copolymers of acrylic and/or methacrylic acid with one or more acrylic, vinylic or allylic monomers as a grinding aid agent for mineral substances in an aqueous suspension and **characterized in that** said homopolymers and/or copolymers of acrylic and/or methacrylic acid with one or more acrylic, vinylic or allylic monomers are neutralized so that the percent molar neutralization of the active acid sites of the polymer by a neutralizing agent containing the calcium ion is between 15% and 40% with a molar neutralization rate of the active acid sites of the polymer by one or more monofunctional neutralizing agents, containing very particularly the sodium ion, between 7% and 70%, a molar neutralization rate of the active acid sites of the polymer by a neutralizing agent containing the magnesium, barium, zinc, aluminum or a bifunctional amine ion or mixtures thereof, and in particular by a neutralizing agent containing the magnesium ion between 0% and 30%, and a molar rate of the non-neutralized active acid sites between 15% and 78%, and **in that** the said homopolymers and/or copolymers of acrylic and/or methacrylic acid with one or more acrylic, vinylic or allylic monomers have a weight-average molecular weight $M_w$ between 1,500 and 50,000, preferentially between 5,000 and 25,000, determined by aqueous GPC whose references, used as standards, belong to a series of sodium polyacrylates marketed by the Polymer Standards Service Company under the names PSS-PAA ranging from 18K to 2K.

11. Aqueous suspension of mineral particles according to claim 10 **characterized in that** it contains 0.05% to 5% by dry weight, relative to the dry weight of mineral substances, of the grinding aid agent used in the process according to one any of claims 1 to 9, preferentially from 0.3 to 1.0% by dry weight relative to the dry weight of mineral substance, and **in that** it has a visible light diffusion capacity measured by the value of the light diffusion coefficient S greater than 100 m$^2$/kg for a coating weight of 20 g/m$^2$.

12. Aqueous suspension of mineral particles according to any one of claims 10 or 11 **characterized in that** the mineral particles are chosen from a natural calcium carbonate such as calcite, chalk or even marble, synthetic calcium carbonate also called precipitated calcium carbonate, the dolomites, magnesium hydroxide, gypsum or aluminum hydroxide or mixtures thereof.

13. Use of the product in the form of an aqueous suspension according to any one of claims 10 to 12 in the areas of paper fillers and paper coatings as well as in paint.

14. Paper coating color **characterized in that** it contains the product in the form of an aqueous suspension according to any of claims 10 to 12 and **in that** it has a visible light diffusion capacity measured by the value of the light diffusion coefficient S greater than 100 m$^2$/kg for a coating weight of 20 g/m$^2$.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2603042
- EP 0100947 A
- EP 0127388 A
- EP 0129329 A
- EP 0542644 A
- FR 2488814
- EP 0100948 A
- EP 0542643 A
- WO 0148093 A
- FR 2303681